# NEUE EUROPÄISCHE PATENTSCHRIFT

(11) **EP 2 244 839 B2**
(45) Veröffentlichungstag und Bekanntmachung des Hinweises auf die Entscheidung über den Einspruch: **27.07.2016**
(45) Hinweis auf die Patenterteilung: 28.08.2013
(21) Anmeldenummer: 09714077.6
(22) Anmeldetag: 18.02.2009
(51) Int. Cl.: B05B 15/12, B05D 3/04, B05D 1/02, B05D 7/14

(54) **LACKIERANLAGE**
PAINTING SYSTEM
INSTALLATION DE PEINTURE

(30) Priorität: 29.02.2008 DE 102008013713
(43) Veröffentlichungstag der Anmeldung: 03.11.2010
(73) Patentinhaber: Dürr Systems GmbH, 74321 Bietigheim-Bissingen (DE)
(72) Erfinder: KLENGE, Thomas, 71229 Leonberg (DE); WIELAND, Dietmar, 71336 Waiblingen (DE)
(74) Vertreter: Hoeger, Stellrecht & Partner Patentanwälte mbB
(86) Internationale Anmeldenummer: PCT/EP2009/001152
(87) Internationale Veröffentlichungsnummer: WO 2009/106256

(56) Entgegenhaltungen:
- EP-A- 0 766 050
- EP-A- 1 649 936
- WO-A-2005/107960
- DE-A1- 4 446 089
- DE-U1- 8 327 215
- DE-U1- 29 912 546
- JP-A- 54 066 547
- US-A- 5 063 835
- US-A- 5 922 130

## Beschreibung

Die vorliegende Erfindung betrifft eine Lackieranlage, umfassend mindestens eine Lackierkabine, mindestens eine Vorrichtung zum Zuführen von Luft zu der Lackierkabine, mindestens eine Konditioniereinheit, ein oberhalb der Lackierkabine angeordnetes, mittels einer Filterdecke von der Lackierkabine getrenntes Plenum und eine Fördervorrichtung zur Förderung von in der Lakkierkabine zu lackierenden Werkstücken in einer Förderrichtung.

Solche Lackieranlagen sind aus dem Stand der Technik bekannt.

Bei den bekannten Lackieranlagen nimmt die Vorrichtung zum Zuführen von Luft zu der Lackierkabine einen großen Raum ein. Ferner führt die geometrische Anordnung von Leitungen zum Zuführen von Luft zu der Lackierkabine bei den bekannten Lackieranlagen zu einem Druckverlust, der dadurch ausgeglichen wird, dass stärkere Gebläse zum Antreiben der Luft verwendet werden. Dies führt zu einem erhöhten Energiebedarf beim Betrieb der bekannten Lackieranlagen.

Die EP 0 766 050 A2 offenbart eine Lackieranlage gemäß dem Oberbegriff von Anspruch 1.

Die US 5,063,835 A offenbart eine Lackieranlage, bei welcher eine Filtervorrichtung in ein Dach einer Lackierkabine der Lackieranlage integriert ist.

Die JP 54-66547 offenbart eine Lackieranlage mit Konditioniereinheiten zur Konditionierung von in einem Umluftkreislauf geführter Luft, welche oberhalb eines Plenums der Lackieranlage angeordnet sind.

Der vorliegenden Erfindung liegt die Aufgabe zugrunde, eine Lackieranlage der eingangs genannten Art zu schaffen, welche besonders platzsparend ist und einen besonders energieeffizienten Betrieb ermöglicht.

Diese Aufgabe wird durch eine Lackieranlage nach Anspruch 1 gelöst.

Unter einer Außenkontur der Lackierkabine ist in dieser Beschreibung und den beigefügten Ansprüchen die äußere Begrenzung des Raumbereichs zu verstehen, der, wenn jeder senkrecht zur Förderrichtung genommene Querschnitt der Lackierkabine längs der Förderrichtung bis zu den Enden der Lackierkabine bewegt wird, von mindestens einem dieser Querschnitte überstrichen wird.

Die Bewegung eines Querschnitts längs der Förderrichtung zur Ermittlung der Außenkontur erfolgt dabei so, dass der bewegte Querschnitt immer senkrecht zur lokalen Förderrichtung ausgerichtet ist. Bei einer nichtkonstanten Förderrichtung (bei einem gekrümmten Förderweg) wird ein Querschnitt folglich während der Bewegung zu den Enden der Lackierkabine dem Verlauf der jeweils lokalen Förderrichtung entsprechend gedreht.

Die so definierte Außenkontur umschließt folglich immer einen Raumbereich, der mindestens genauso groß ist wie der von den Außenwänden umgebene Raumbereich, aber auch außerhalb der Außenwände liegende Raumbereiche enthalten kann.

Ein Gegenstand kann also außerhalb des von den Außenwänden umgebenen Raumbereichs und dennoch innerhalb der zugehörigen Außenkontur angeordnet sein.

Bei einer bevorzugten Ausgestaltung der Erfindung ist die Außenkontur der Lackierkabine im Wesentlichen durch die Außenflächen eines Quaders gebildet. Eine quaderförmige Außenkontur ergibt sich dann durch Überstreichen eines Raumbereichs mittels eines senkrecht zur Förderrichtung genommenen Querschnitts, wenn ein größter senkrecht zur Förderrichtung genommener Querschnitt rechteckig ausgebildet ist und längs einer linearen Förderrichtung zu den Enden der Lackierkabine bewegt wird.

Bei einer Weiterbildung der Erfindung kann vorgesehen sein, dass ein senkrecht zur Förderrichtung genommener Querschnitt der Außenkontur der Lackierkabine gleich groß ist wie ein größter senkrecht zur Förderrichtung genommener Querschnitt der Lackierkabine. In diesem Fall steht kein Bereich der Lackierkabine seitlich über den Raumbereich über, der von dem größten senkrecht zur Förderrichtung genommenen Querschnitt der Lackierkabine überstrichen wird, wenn dieser größte Querschnitt längs der Förderrichtung bis zu den Enden der Lackierkabine bewegt wird.

Bei einer vorteilhaften Ausgestaltung der Erfindung ist vorgesehen, dass in mindestens einer der die Lackierkabine quer zur Förderrichtung begrenzenden seitlichen Außenwände mindestens eine Einbuchtung zur Aufnahme zumindest eines Teils des mindestens einen geradlinigen Rückführabschnitts vorgesehen ist.

Bei einer bevorzugten Ausführungsform kann die mindestens eine Einbuchtung in der mindestens einen seitlichen Außenwand in einem Eckbereich der Lakkierkabine angeordnet sein, in dem die seitliche Außenwand an eine die Lackierkabine in der Förderrichtung begrenzende vordere oder hintere Außenwand der Lakkierkabine angrenzt.

Bei einer Weiterbildung der Erfindung kann vorgesehen sein, dass die mindestens eine Einbuchtung eine zu dem mindestens einen geradlinigen Rückführabschnitt im Wesentlichen komplementäre Form aufweist. Auf diese Weise kann der mindestens eine geradlinige Rückführabschnitt im Wesentlichen vollständig und damit besonders platzsparend in der Einbuchtung aufgenommen werden.

Bei einer vorteilhaften Ausführungsform der Erfindung kann vorgesehen sein, dass mehrere Lackierkabine oder in ihrer Form einer Lackierkabine ähnliche Kabinen in Förderrichtung hintereinander angeordnet sind. Bei einer solchen Anordnung kann vorgesehen sein, dass ein geradliniger Rückführabschnitt, der beispielsweise einen in einer Richtung quer zur Durchströmungsrichtung genommenen rechteckigen Querschnitt aufweist, auf zwei Seiten benachbart zu einer ersten Lakkierkabine und auf einer dritten Seite benachbartzu einer zu der ersten Lackierkabine benachbarten zweiten Lakkierkabine oder einer in ihrer Form einer Lackierkabine ähnlichen Kabine angeordnet ist.

Nach einer Weiterbildung der Erfindung kann vorgesehen sein, dass die Seite des mindestens einen geradlinigen Rückführabschnitts, die nicht benachbartzu einer Lackierkabine oder einer in ihrer Form ähnlichen Kabine angeordnet ist, mit den im Wesentlichen parallel zur Förderrichtung verlaufenden seitlichen Außenwänden der benachbarten Kabinen im Wesentlichen bündig ist.

Günstig ist es, wenn zumindest ein Teil des geradlinigen Rückführabschnitts des Umluftkreislaufs zumindest teilweise innerhalb einer Außenkontur des Plenums verläuft.

Unter einer Außenkontur des Plenums ist in dieser Beschreibung und in den beigefügten Ansprüchen die äußere Begrenzung des Raumbereichs zu verstehen, der, wenn jeder senkrecht zur Förderrichtung genommene Querschnitt des Plenums längs der Förderrichtung bis zu den Enden der Lackierkabine bewegt wird, von mindestens einem dieser Querschnitte überstrichen wird.

Bei einer vorteilhaften Ausführungsform der Erfindung kann vorgesehen sein, dass ein senkrecht zur Förderrichtunggenommener Querschnitt der Außenkontur des Plenums gleich groß ist wie ein größter senkrecht zur Förderrichtung genommener Querschnitt des Plenums. In diesem Fall steht kein Bereich des Plenums seitlich über den Raumbereich über, der von dem größten senkrecht zur Förderrichtung genommenen Querschnitt des Plenums überstrichen wird, wenn dieser größte Querschnitt längs der Förderrichtung bis zu den Enden der Lackierkabine bewegt wird.

Nach einer Weiterbildung der Erfindung kann vorgesehen sein, dass die Außenkontur des Plenums im Wesentlichen durch die Außenflächen eines Quaders gebildet ist.

Vorteilhaft ist es, wenn das Plenum Außenwände umfasst, die mit den Außenwänden der Lackierkabine im Wesentlichen fluchten. Dadurch können die Außenwände des Plenums direkt auf die Außenwände der Lakkierkabine aufgesetzt werden.

Bei einer Weiterbildung der Erfindung kann vorgesehen sein, dass an der Lackierkabine mindestens eine Einbuchtung zur Aufnahme zumindest eines Teils des geradlinigen Rückführabschnitts des Umluftkreislaufs vorgesehen ist, die sich oberhalb der Lackierkabine im Bereich des Plenums fortsetzt, und dass der geradlinige Rückführabschnitt sich in die Einbuchtung erstreckt. Dadurch ist eine besonders platzsparende Anordnung des geradlinigen Rückführabschnitts sowohl an der Lackierkabine als auch an dem Plenum möglich.

Die Lackieranlage umfassteinen unter der Lakkierkabine angeordneten Filterraum, wobei zumindest ein Teil eines geradlinigen Rückführabschnitts des Umluftkreislaufs zumindest teilweise innerhalb einer Außenkontur des Filterraums verläuft.

Unter einer Außenkontur des Filterraums ist in dieser Beschreibung und in den beigefügten Ansprüchen die äußere Begrenzung des Raumbereichs zu verstehen, der, wenn jeder senkrecht zur Förderrichtung genommene Querschnittdes Filterraums längs der Förderrichtung bis zu den Enden der Lackierkabine bewegt wird, von mindestens einem dieser Querschnitte überstrichen wird. Günstig ist es, wenn ein senkrecht zur Förderrichtung genommener Querschnitt der Außenkontur des Filterraums gleich groß ist wie ein größter senkrecht zur Förderrichtung genommener Querschnitt des Filterraums. In diesem Fall steht kein Bereich des Filterraums seitlich über den Raumbereich über, der von dem größten senkrecht zur Förderrichtung genommenen Querschnitt des Filterraums überstrichen wird, wenn dieser größte Querschnitt längs der Förderrichtung bis zu den Enden der Lackierkabine bewegt wird.

Bei einer Ausgestaltung der Erfindung kann vorgesehen sein, dass die Außenkontur des Filterraums im Wesentlichen durch die Außenflächen eines Quaders gebildet ist.

Vorteilhaft kann es sein, wenn der Filterraum Außenwände umfasst, die mit den Außenwänden der Lackierkabine zumindest abschnittsweise im Wesentlichen fluchten. Dadurch können die Außenwände der Lackierkabine direkt auf die Außenwände des Filterraums aufgesetzt werden.

Bei einer Ausgestaltung der Erfindung kann vorgesehen sein, dass an der Lackierkabine mindestens eine Einbuchtung zur Aufnahme zumindest eines Teils des geradlinigen Rückführabschnitts des Umluftkreislaufs vorgesehen ist, die sich unterhalb der Lackierkabine im Bereich des Filterraums fortsetzt, und dass der geradlinige Rückführabschnitt sich in die Einbuchtung erstreckt. Auf diese Weise ist eine besonders platzsparende Anordnung des geradlinigen Rückführabschnitts an der Lackierkabine und an dem Filterraum möglich.

Bei einer Ausführungsform der Erfindung kann vorgesehen sein, dass ein stromaufwärts angeordnetes Ende des geradlinigen Rückführabschnitts mit mindestens einem Gebläse zum Antreiben einer Luftströmung in dem geradlinigen Rückführabschnitt verbunden ist. Dadurch ist die Luft besonders einfach durch den geradlinigen Rückführabschnitt förderbar.

Bei einer Weiterbildung der Erfindung kann vorgesehen sein, dass ein stromaufwärts angeordnetes Ende des geradlinigen Rückführabschnitts in Fluidverbindung mit mindestens einem Sammelkanal steht.

Unter einem Sammelkanal ist in dieser Beschreibung und in den Patentansprüchen ein Kanal zu verstehen, in den mehrere andere Kanäle münden. Diese Kanäle können beispielsweise Verbindungskanäle sein, die der Zuführung der Luft aus im Filterraum angeordneten Filtern zu dem Sammelkanal dienen.

Bei einer vorteilhaften Ausgestaltung der Erfindung sind zwei Sammelkanäle vorgesehen, die an einem unteren Ende der Lackieranlage, parallel zur Förderrichtung und außerhalb von Außenwänden, welche den Filterraum seitlich begrenzen, verlaufen.

Bei einer Weiterbildung der Erfindung kann vorgesehen sein, dass mindestens ein Sammelkanal mit einem geradlinigen Rückführabschnitt über ein Gebläse in Fluidverbindung steht, wobei das Gebläse die in dem mindestens einen Sammelkanal gesammelte Luft in den geradlinigen Rückführabschnitt fördert.

Vorteilhaft kann es sein, wenn zwei geradlinige Rückführabschnitte vorgesehen sind, die benachbart zu einander gegenüberliegenden, die Lackierkabine quer zur Förderrichtung begrenzenden seitlichen Außenwänden der Lackierkabine angeordnet sind.

Bei einer bevorzugten Ausgestaltung der Erfindung kann vorgesehen sein, dass zwei geradlinige Rückführabschnitte vorgesehen sind, die bezüglich einer sich in der Förderrichtung erstreckenden vertikalen Längsmittelebene der Lackierkabine spiegelsymmetrisch zueinander angeordnet sind. Dadurch ist eine einfache Konstruktion der Lackieranlage möglich.

Nach einer Weiterbildung der Erfindung kann vorgesehen sein, dass die zwei geradlinigen Rückführabschnitte zumindest teilweise auf einander zugewandten Innenseiten von zwei parallel zur Förderrichtung angeordneten Sammelkanälen vorgesehen sind.

Weitere Merkmale und Vorteile der Erfindung sind Gegenstand der nachfolgenden Beschreibung und der zeichnerischen Darstellung von Ausführungsbeispielen.

In den Figuren zeigen:
- Fig. 1: eine schematische perspektivische Darstellung einer Lackieranlage mit einer Vorrichtung zum Zuführen von Luft zu einem. Applikationsbereich der Lakkieranlage, mit Blickrichtung auf eine Werkstückeintrittsseite einer Lackierkabine der Lackieranlage;
- Fig. 2: eine schematische perspektivische Darstellung der Lackieranlage mit der Vorrichtung zum Zuführen von Luft aus Fig. 1, mit Blickrichtung auf eine Werkstückaustrittsseite der Lackierkabine der Lackieranlage;
- Fig. 3: eine schematische Seitenansicht auf eine in einer Förderrichtung linke Seite der Lackieranlage mit der Vorrichtung zum Zuführen von Luft aus Fig. 1, in teiltransparenter Darstellung;
- Fig. 4: eine schematische Draufsicht von unten auf die Lackieranlage mit der Vorrichtung zum Zuführen von Luft aus Fig. 1 in teiltransparenter Darstellung, mit Blickrichtung in Richtung des Pfeiles 4 in Fig. 3;
- Fig. 5: eine schematische Draufsicht auf die Werkstückaustrittsseite der Lackierkabine der Lakkieranlage mit der Vorrichtung zum Zuführen von Luft aus Fig. 1, mit Blickrichtung in Richtung des Pfeiles 5 in Fig. 3;
- Fig. 6: eine schematische Draufsicht von oben auf die Lackieranlage mitder Vorrichtung zum Zuführen von Luft aus Fig. 1 in teiltransparenter Darstellung, mit Blickrichtung in Richtung des Pfeiles 6 in Fig. 3;
- Fig. 7: eine schematische Draufsicht auf die Werkstückeintrittsseite der Lackierkabine der Lakkieranlage mit der Vorrichtung zum Zuführen von Luft aus Fig. 1, mit Blickrichtung in Richtung des Pfeiles 7 in Fig. 3;
- Fig. 8: eine schematische Darstellung des Umluftkreislaufs der Vorrichtung zum Zuführen von Luft aus Fig. 1;
- Fig. 9: eine schematische Darstellung des Umluftkreislaufs einer zweiten Ausführungsform einer Vorrichtung zum Zuführen von Luft;
- Fig. 10: eine schematische Darstellung des Umluftkreislaufs einer dritten Ausführungsform einer Vorrichtung zum Zuführen von Luft;
- Fig. 11: eine schematische Darstellung des Umluftkreislaufs einer vierten Ausführungsform einer Vorrichtung zum Zuführen von Luft; und
- Fig. 12: eine schematische Darstellung des Umluftkreislaufs einer fünften Ausführungsform einer Vorrichtung zum Zuführen von Luft.

Gleiche oder funktional äquivalente Elemente sind in allen Figuren mit denselben Bezugszeichen versehen.

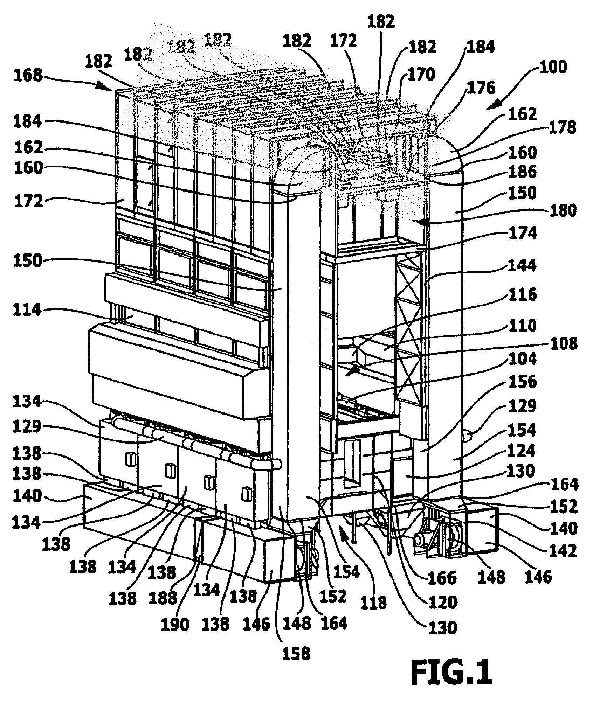

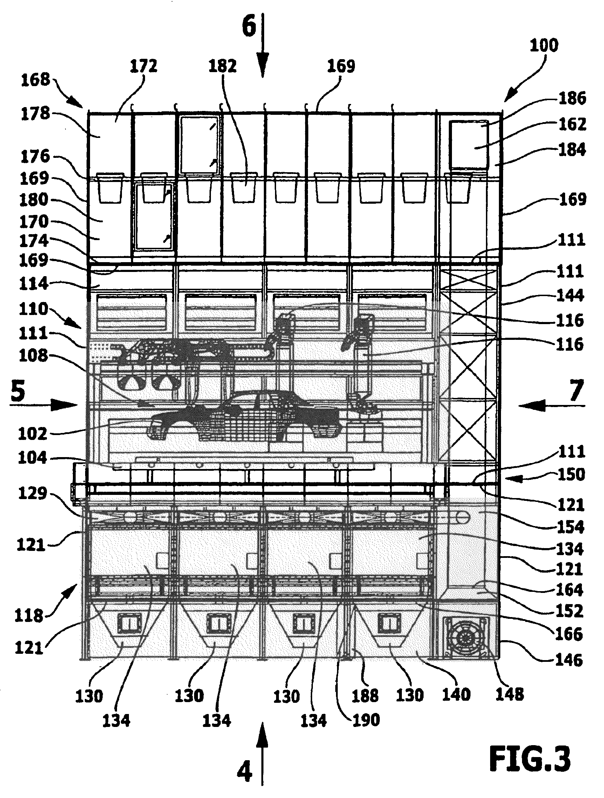

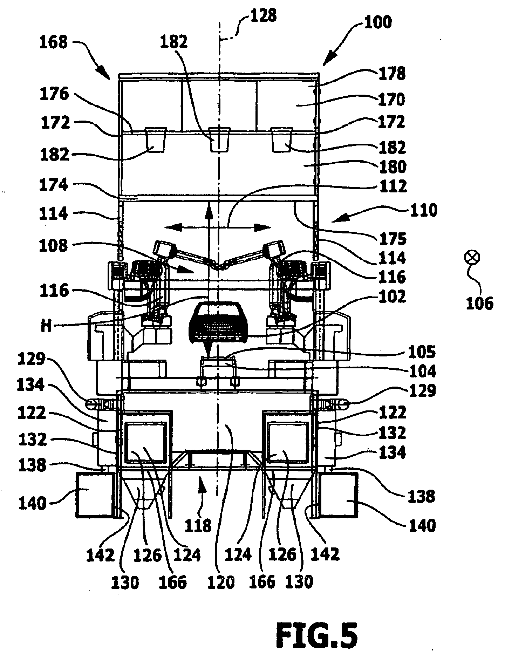

Eine in den Fig. 1 bis 7 dargestellte, als Ganzes mit 100 bezeichnete Lackieranlage zum Lackieren von Werkstücken, insbesondere von Fahrzeugkarosserien 102, umfasst eine rein schematisch dargestellte Fördervorrichtung 104, mittels welcher die Fahrzeugkarosserien 102, welche oberhalb einer in Fig. 5 dargestellten Oberseite 105 der Fördervorrichtung 104 anordenbar sind, längs einer Förderrichtung 106 durch einen Applikationsbereich 108 einer als Ganzes mit 110 bezeichneten Lackierkabine bewegt werden können.

Die Fördervorrichtung 104 kann beispielsweise als ein invertierter Kreisförderer oder auch als ein invertierter Einschienenförderer ausgebildet sein.

Der Applikationsbereich 108 ist der Innenraum der Lackierkabine 110, weiche in einer senkrecht zur Förderrichtung 106, die der Längsrichtung der Lackierkabine 110 entspricht, verlaufenden horizontalen Querrichtung 112 zu beiden Seiten der Fördervorrichtung 104 durch jeweils eine als Kabinenwand 114 ausgebildete Außenwand der Lackierkabine 110 begrenzt ist.

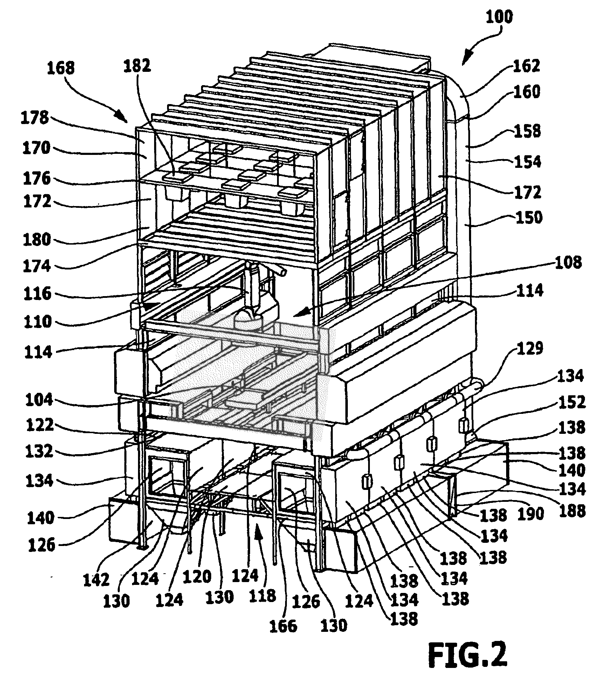

Zu beiden Seiten der Fördervorrichtung 104 sind in der Lackierkabine 110 beispielsweise als Lakkierroboter ausgebildete Lackiereinrichtungen 116 angeordnet (siehe Fig. 2, 3, 5 und 6).

Unterder Lackierkabine 110 ist eine als Ganzes mit 118 bezeichnete Reinigungsvorrichtung angeordnet. Die Reinigungsvorrichtung 118 dientdem Abtrennen von Nasslack-Oversprayaus einem Luftstrom, welcher durch den Applikationsbereich 108 der Lackierkabine 110 nach unten in die Reinigungsvorrichtung 118 geleitet wird.

Die Reinigungsvorrichtung 118 umfasst einen im wesentlichen quaderförmigen Filterraum 120,welcher in der Querrichtung 112 der Lackierkabine 110durch vertikale Seitenwände 122 begrenzt ist, die im Wesentlichen mit den seitlichen Kabinenwänden 114 der Lackierkabine 110 fluchten, so dass der Filterraum 120 im Wesentlichen dieselbe Ausdehnung in einer zur Förderrichtung 106 senkrechten und horizontalen Richtung aufweist wie die Lackierkabine 110.

Die Seitenwände 122 bilden die seitlichen Außenwände des Filterraums 120.

Im Filterraum 120 sind mehrere, beispielsweise acht, Filtervorrichtungen 124 angeordnet, in welchen regenerierbare Oberflächenfilter vorgesehen sind. Die acht Filtervorrichtungen 124 sind bei dieser Ausführungsform in zwei Reihen zu je vier Filtervorrichtungen 124 angeordnet, wobei die zwei Reihen jeweils parallel zur Förderrichtung 106 und horizontal ausgerichtet und bezüglich einer vertikal und in der Förderrichtung 106 verlaufenden Längsmittelebene 128 der Lackierkabine 110 spiegelsymmetrisch zueinander angeordnet sind.

Im Filterraum 120 oberhalb der Filtervorrichtungen 124 ist in dieser Ausführungsform beidseitig jeweils eine Luftzuleitungsvorrichtung 129 vorgesehen.

Mittels dieser Luftzuleitungsvorrichtungen 129 kann beispielsweise ein Luftschleier oberhalb der Filtervorrichtungen 124 erzeugtwerden, welcher ein Absetzen von Nasslack-Overspray an der Oberseite der Filtervorrichtungen 124 verhindert.

Unter jeder Filtervorrichtung 124 ist jeweils ein trichterförmiger Aufnahmebehälter 130 zur Aufnahme von Nasslack-Overspray und Filterhilfsmaterial, das von den regenerierbaren Oberflächenfiltern abgereinigt wird, angeordnet.

Der Innenraum jeder Filtervorrichtung 124 ist auf ihrer der Längsmittelebene 128 der Lackierkabine 110 abgewandten Seite durch jeweils einen Grundkörper 134 begrenzt.

Da jeder Filtervorrichtung 124 ein solcher Grundkörper 134 zugeordnet ist, umfasst die Lackieranlage 100 bei dieser Ausführungsform acht Grundkörper 134.

Jeder Grundkörper 134 umfasst bei dieser Ausführungsform eine in den Zeichnungen nichtdargestellte Abreinigungsvorrichtung zum regelmäßigen Abreinigen von an den Oberflächenfiltern der Filtervorrichtungen 124 anfiltrierten Nasslack-Overspray-Partikeln und Filterhilfsmaterial (Precoat-Material).

Unterhalb jedes Grundkörpers 134 sind jeweils zwei vertikale Verbindungskanäle 138 angeordnet, welche in Sammelkanäle 140 münden und eine Fluidverbindung zwischen den Grundkörpern 134 und den Sammelkanälen 140 ermöglichen.

Bei dieser Ausführungsform sind zwei Sammelkanäle 140 vorgesehen, welche sich unterhalb der Grundkörper 134 und der Verbindungskanäle 138 erstrecken und parallel zur Förderrichtung 106 ausgerichtet sind.

Die Sammelkanäle 140 sind bezüglich der Längsmittelebene 128 spiegelsymmetrisch zueinander ausgebildet und angeordnet und voneinander beabstandet angeordnet. Sie umfassen jeweils eine der Längsmittelebene 128 der Lackierkabine 110 zugewandte Innenseite 142, welche weiter von der Längsmittelebene 128 der Lackierkabine 110 beabstandet ist als die Außenwände 132 der Filtervorrichtungen 124.

Die Sammelkanäle 140 erstrecken sich in einer zur Förderrichtung 106 parallelen Richtung im Wesentlichen über die gesamte Länge der Lackierkabine 110 und weisen einen in einer Richtung senkrecht zur Förderrichtung 106 genommenen rechteckigen Querschnitt auf.

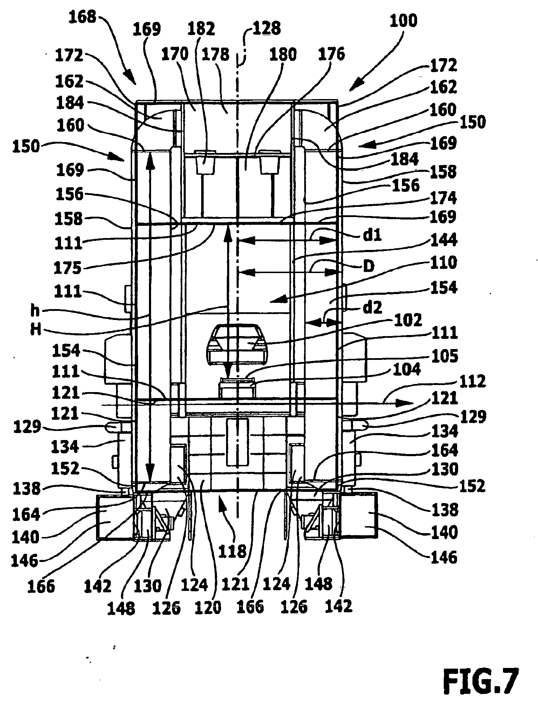

An den einer Werkstückeintrittsseite 144 der Lackierkabine 110 zugewandten Enden 146 der Sammelkanäle 140 ist jeweils auf der Innenseite 142 der Sammelkanäle 140, d.h. auf der der Längsmittelebene 128 zugewandten Seite der Sammelkanäle 140, ein Gebläse 148 angeordnet (siehe insbesondere Fig. 7).

Über jedem der beiden Gebläse 148 ist jeweils eine Rückführleitung 150 angeordnet.

Jede der Rückführleitungen 150 umfasst ein Adapterelement 152 und einen geradlinigen Rückführabschnitt 154, wobei der geradlinige Rückführabschnitt 154 der Rückführleitung 150 mit einem der Gebläse 148 mittels des Adapterelements 152 in Fluidverbindung steht.

Die geradlinigen Rückführabschnitte 154 der beiden Rückführleitungen 150 sind vertikal ausgerichtet und bezüglich der Längsmittelebene 128 der Lackierkabine 110 spiegelsymmetrisch zueinander ausgebildet und angeordnet und voneinander beabstandet angeordnet.

Die geradlinigen Rückführabschnitte 154 umfassen einander gegenüberliegende, der Längsmittelebene 128 der Lackierkabine 110 zugewandte Innenseiten 156 und den Innenseiten 156 abgewandte Außenseiten 158.

Die geradlinigen Rückführabschnitte 154 weisen einen in horizontaler Richtung genommenen rechteckigen Querschnitt auf.

Die geradlinigen Rückführabschnitte 154 sind so an der Lackieranlagen 100 angeordnet, dass die Innenseiten 156 der geradlinigen Rückführabschnitte 154 einen geringeren Abstand von der Längsmittelebene 128 der Lackierkabine 110 aufweisen als die Kabinenwände 114 der Lackierkabine 110 und die Außenwände 132 der Filtervorrichtungen 124.

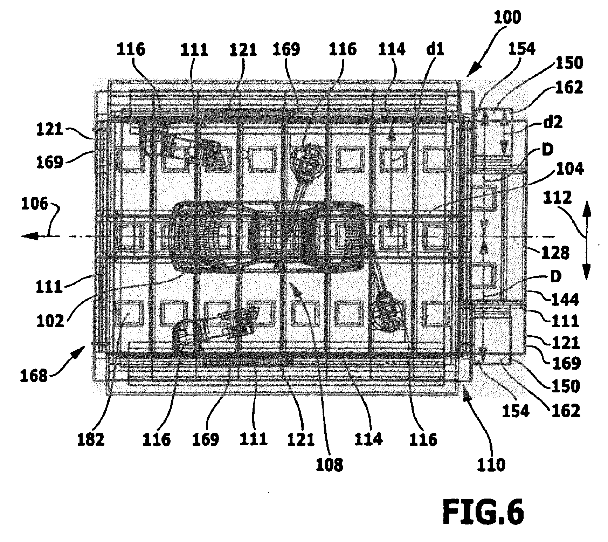

Die Außenseiten 158 der geradlinigen Rückführabschnitte 154 weisen jeweils einen Abstand D von der Längsmittelebene 128 der Lackierkabine 110 auf, welcher kleiner ist als die Summe aus dem Abstand d1 zwischen einer Kabinenwand 114 der Lackierkabine 110 und der Längsmittelebene 128 der Lackierkabine 110 und dem Abstand d2 zwischen der Innenseite 156 und der Außenseite 158 des geradlinigen Rückführabschnitts 154 der Rückführleitung 150 (siehe Fig. 6 und 7).

Bei einer in den Zeichnungen nicht dargestellten Ausführungsform kann vorgesehen sein, dass die Außenseiten 158 der geradlinigen Rückführabschnitte 154 mit den Kabinenwänden 114 der Lackierkabine 110 fluchten.

Die geradlinigen Rückführabschnitte 154 der Rückführleitung 150 erstrecken sich In der zeichnerisch dargestellten Ausführungsform von einem unteren Ende 164, welches ungefähr auf der Höhe eines oberen Randes 166 der Aufnahmebehälter 130 angeordnet ist, vertikal nach oben bis zu einem oberen Ende 160, welches benachbart zu einem über der Lackierkabine 110 vorgesehenen Plenum 168 angeordnet ist.

Der geradlinige Rückführabschnitt 154 erstrecktsich folglich über eine Höhe h, die wesentlich größer ist als der Abstand H zwischen einer Unterseite 175 einer Filterdecke 174 und der Oberseite 105 der Fördervorrichtung 104 (siehe Fig. 7).

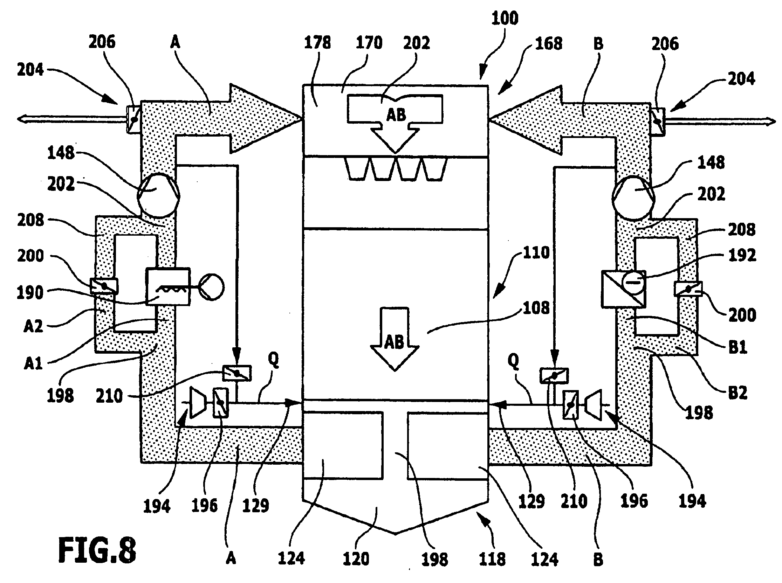

Bei dieser Ausführungsform stehen die geradlinigen Rückführabschnitte 154 mit den Luftzuleitungsvorrichtungen 129 in Fluidverbindung, um eine Zuführung von Umluft aus den geradlinigen Rückführabschnitten 154 direkt in den Filterraum 120 zu ermöglichen. Zur Regelung des den Luftzuleitungsvorrichtungen 129 aus den geradlinigen Rückführabschnitten 154 zugeführten Umluftstroms sind als Sperrklappen 210 ausgebildete Ventile vorgesehen (siehe Fig. 8).

Ferner stehen die Luftzuleitungsvorrichtungen 129 zu beiden Seiten des Filterraums 120 mit jeweils einer (in den Fig. 1 bis 7 nicht dargestellten) Zuluftanlage 194 (siehe Fig. 8) in Fluidverbindung. Zur Regelung des den Luftzuleitungsvorrichtungen 129 von den Zuluftanlagen 194 zugeführten Zuluftstroms sind als Zuluftklappen 196 ausgebildete Ventile vorgesehen.

An dem oberen Ende 160 jedes geradlinigen Rückführabschnitts 154 ist jeweils ein gekrümmter Rückführabschnitt 162 vorgesehen, welcher in Fluidverbindung mit dem geradlinigen Rückführabschnitt 154 steht.

Das Plenum 168 umfasst eine im Wesentlichen quaderförmige Kammer 170, welche sich in der Förderrichtung 106 über im Wesentlichen die gesamte Länge der Lackierkabine 110 hinweg erstreckt und in der Querrichtung 112 der Lackierkabine 110 durch vertikale Seitenwände 172 begrenzt ist, die mit den seitlichen Kabinenwänden 114 der Lackierkabine 110 fluchten, so dass die Kammer 170 im Wesentlichen dieselbe horizontale Querschnittsfläche aufweist wie die Lackierkabine 110.

Die Seitenwände 172 bilden die seitlichen Außenwände des Plenums 168.

Die Kammer 170 des Plenums 168 ist mittels der horizontal ausgerichteten Filterdecke 174 von dem Applikationsbereich 108 der Lackierkabine 110 getrennt, wobei die horizontale Unterseite 175 der Filterdecke 174 dem Applikationsbereich 108 der Lackierkabine 110 zugewandt ist.

Über der Filterdecke 174 und parallel zu derselben ist eine Zwischendecke 176 in dem Plenum 168 vorgesehen, welche die Kammer 170 des Plenums 168 in einen oberen Bereich 178 und einen unteren Bereich 180 teilt.

In der Zwischendecke 176 sind mehrere, beispielsweise achtundzwanzig, Sicherheitsfilter 182 angeordnet, welche zum Entfernen eventuell noch in dem Luftstrom befindlicherVerunreinigungen dienen, um jegliche Zufuhr von Verunreinigung zu dem Applikationsbereich 108 der Lackierkabine 110 zu vermeiden.

Die gekrümmten Rückführabschnitte 162 sind in Einbuchtungen 184 der Seitenwände 172 der Kammer 170 angeordnet (siehe insbesondere Fig. 1).

Die Einbuchtungen 184 sind vertikal ausgerichtet und beispielsweise an den den Werkstückeintrittsseiten 144 der Lackierkabine 110 zugewandten Enden der Seitenwände 172 der Kammer 170 angeordnet.

In den Einbuchtungen 184 sind Durchtrittsöffnungen 186 vorgesehen, an denen die gekrümmten Rückführabschnitte 162 in den oberen Bereich 178 der Kammer 170 des Plenums 168 einmünden.

Bei dieser Ausführungsform erstrecken sich die Einbuchtungen 184 über die gesamte Höhe des Plenums 168 und über die gesamte Höhe der Lackierkabine 110.

Die geradlinigen Rückführabschnitte 154 der Rückführleitungen 150 verlaufen teilweise innerhalb der Einbuchtungen 184 und weisen dadurch, verglichen mit einer Anordnung der geradlinigen Rückführabschnitte 154 außerhalb der Einbuchtungen 184, einen geringeren Abstand zu der Längsmittelebene 128 der Lackierkabine 110 auf.

Insbesondere ergibt sich daraus, dass die geradlinigen Rückführabschnitte 154 zumindest teilweise sowohl innerhalb einer Außenkontur 111 der Lackierkabine 110 als auch innerhalb einer Außenkontur 169 des Plenums 168 verlaufen (Fig. 7).

Die Außenkontur 111 der Lackierkabine 110 ist die äußere Begrenzung des Raumbereichs, der, wenn jeder senkrecht zur Förderrichtung 106 genommene Querschnitt der Lackierkabine 110 längs der Förderrichtung 106 bis zu den Enden der Lackierkabine 110 bewegt wird, von mindestens einem dieser Querschnitte überstrichen wird.

Die Bewegung eines Querschnitts längs der Förderrichtung 106 zur Ermittlung der Außenkontur 111 erfolgt dabei so, dass der bewegte Querschnitt immer senkrecht zur lokalen Förderrichtung ausgerichtet ist. Bei einer nichtkonstanten Förderrichtung 106 (bei einem gekrümmten Förderweg) wird ein Querschnitt folglich während der Bewegung zu den Enden der Lackierkabine 110 dem Verlauf der jeweils lokalen Förderrichtung entsprechend gedreht.

Die so definierte Außenkontur umschließt folglich immereinen Raumbereich, der mindestens genauso groß ist wie der von den Außenwänden der Lackierkabine 110 umgebene Raumbereich, aber auch außerhalb der Außenwände liegende Raumbereiche enthalten kann.

Ein Gegenstand kann also außerhalb des von den Außenwänden umgebenen Raumbereichs und dennoch innerhalb der zugehörigen Außenkontur angeordnet sein.

Die Außenkontur 169 des Plenums 168 ist die äußere Begrenzung des Raum bereichs, der, wenn jeder senkrecht zur Förderrichtung 106 genommene Querschnitt des Plenums 168 längs der Förderrichtung 106 bis zu den Enden der Lackierkabine 110 bewegt wird, von mindestens einem dieser Querschnitte überstrichen wird.

Die geradlinigen Rückführabschnitte 154 erstrecken sich vertikal nach unten in den Bereich des Filterraums 120 und verlaufen daher zumindest teilweise auch innerhalb einer Außenkontur 121 des Filterraums 120, wobei bei dieser Ausführungsform die Außenkontur 121 des Filterraums 120 die äußere Begrenzung des Raumbereichs ist, der, wenn jeder senkrecht zur Förderrichtung 106 genommene Querschnitt des Filterraums 120 längs der Förderrichtung 106 bis zu den Enden des der Lackierkabine 110 bewegt wird, von mindestens einem dieser Querschnitte überstrichen wird (siehe Fig. 6 und 7).

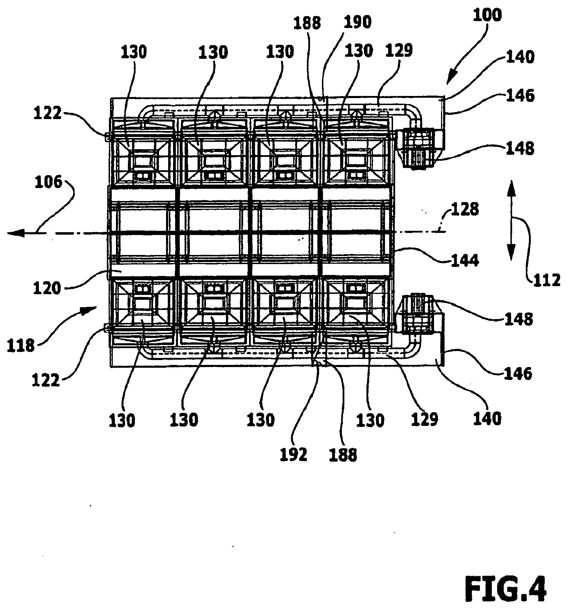

Zur Konditionierung der dem Applikationsbereich 108 der Lackierkabine 110 zuzuführenden Luft sind bei dieser Ausführungsform zwei Konditioniereinheiten 188 vorgesehen, nämlich eine Luftfeuchtigkeitskonditioniereinheit 190, welche in dem bezüglich der Förderrichtung 106 links angeordneten Sammelkanal 140 angeordnet ist, und eine Lufttemperaturkonditioniereinheit 192, welche in dem bezüglich der Förderrichtung 106 rechts angeordneten Sammelkanal 140 angeordnet ist (siehe Fig. 4).

Sowohl die Luftfeuchtigkeitskonditioniereinheit 190 als auch die Lufttemperaturkonditioniereinheit 192 sind relativ zur Förderrichtung 106 jeweils zwischen zwei benachbarten Verbindungskanälen 138, welche Grundkörper 134 mit den Sammelkanälen 140 verbinden, angeordnet.

Die Luftfeuchtigkeitskonditioniereinheit 190 ist relativ zur Förderrichtung 106 zwischen einem in der Förderrichtung 106 zweiten und einem in der Förderrichtung 106 dritten Verbindungskanal 138 der acht in der Förderrichtung 106 hintereinander und bezüglich der Förderrichtung 106 links angeordneten Verbindungskanäle 138 angeordnet.

Die Lufttemperaturkonditioniereinheit 192 und die Luftfeuchtigkeitskonditioniereinheit 190 sind bezüglich der Längsmittelebene 128 der Lackierkabine 110 spiegelsymmetrisch zueinander angeordnet.

Die Lufttemperaturkonditioniereinheit 192 ist damit relativ zur Förderrichtung 106 zwischen einem in der Förderrichtung 106 zweiten und einem in der Förderrichtung 106 dritten Verbindungskanal 138 der acht in der Förderrichtung 106 hintereinander und bezüglich der Förderrichtung 106 rechts angeordneten Verbindungskanäle 138 angeordnet.

Die vorstehend beschriebene Lackieranlage 100 funktioniert wie folgt (siehe insbesondere Fig. 7):
Ein im Applikationsbereich 108 der Lackierkabine 110 geführter Luftstrom wird aufgrund der Lackiertätigkeit der Lackiereinrichtungen 116 mit Nasslack-Overspray-Partikeln verunreinigt.

Der verunreinigte Luftstrom wird aus der Lakkierkabine 110 in den Filterraum 120 der Reinigungsvorrichtung 118 geleitet.

In dem Filterraum 120 erfolgt eine Aufteilung des als Gesamtluftstrom AB bezeichneten Luftstroms in einen ersten Teilluftstrom A und in einen zweiten Teilluftstrom B.

Der erste Teilluftstrom A strömt in die bezüglich der Förderrichtung 106 links von der Längsmittelebene 128 der Lackierkabine 110 angeordneten Filtervorrichtungen 124.

Der zweite Teilluftstrom B strömt in die bezüglich der Förderrichtung 106 rechts von der Längsmittelebene 128 der Lackierkabine 110 angeordneten Filtervorrichtungen 124.

Die Filtervorrichtungen 124 der Reinigungsvorrichtung 118 reinigen die Luftströme A und B von den Nasslack-Overspray-Partikeln, wobei die gereinigte Luft von den Innenräumen 126 der Filtervorrichtungen 124 in die Grundkörper 134 gelangt.

Die an den Oberflächenfiltern der Filtervorrichtungen 124 anfiltrierten Nasslack-Overspray-Partikel und Precoat-Teilchen werden in regelmäßigen Abständen von den Oberflächenfiltern abgereinigt und in den Aufnahmebehältern 130 aufgenommen.

Durch die Verbindungskanäle 138 gelangt die gereinigte Luft in die Sammelkanäle 140.

Die in den Sammelkanälen 140 gesammelte gereinigte Luft wird entgegen der Förderrichtung 106 zu den der Werkstückeintrittsseite 144 der Lackierkabine 110 zugewandten Enden 146 der Sammelkanäle 140 geführt.

Aufgrund der Anordnung der Luftfeuchtigkeitskonditioniereinheit 190 relativ zur Förderrichtung 106 zwischen dem in der Förderrichtung 106 zweiten und dem in der Förderrichtung 106 dritten Verbindungskanal 138 der acht bezüglich der Förderrichtung 106 links angeordneten Verbindungskanäle 138 wird ein Unterteilluftstrom A2, welcher durch einen in der Förderrichtung 106 ersten und den in der Förderrichtung 106 zweiten Verbindungskanal 138 der acht bezüglich der Förderrichtung 106 links angeordneten Verbindungskanäle 138 strömt, nicht konditioniert.

Lediglich ein Unterteilluftstrom A1, welcher aus dem in der Förderrichtung 106 dritten, einem in der Förderrichtung 106 vierten, einem in der Förderrichtung 106 fünften, einem in der Förderrichtung 106 sechsten, einem in der Förderrichtung 106 siebten und einem in der Förderrichtung achten Verbindungskanal 138 der acht bezüglich der Förderrichtung 106 links angeordneten Verbindungskanäle 138 in den Sammelkanal 140 strömt, wird durch die Luftfeuchtigkeitskonditioniereinheit 190 geführt und dabei von derselben konditioniert.

Aufgrund der Anordnung der Lufttemperaturkonditioniereinheit 192 relativ zur Förderrichtung 106 zwischen dem in der Förderrichtung 106 zweiten und dem in der Förderrichtung 106 dritten Verbindungskanal 138 der acht bezüglich der Förderrichtung 106 rechts angeordneten Verbindungskanäle 138 wird ein Unterteilluftstrom B2, welcher durch einen in der Förderrichtung 106 ersten und den in der Förderrichtung 106 zweiten Verbindungskanal 138 der acht bezüglich der Förderrichtung 106 rechts angeordneten Verbindungskanäle 138 strömt, nicht konditioniert.

Lediglich ein Unterteilluftstrom B1, welcher aus dem in der Förderrichtung 106 dritten, einem in der Förderrichtung 106 vierten, einem in der Förderrichtung 106 fünften, einem in der Förderrichtung 106 sechsten, einem in der Förderrichtung 106 siebten und einem in der Förderrichtung achten Verbindungskanal 138 der acht bezüglich der Förderrichtung 106 rechts angeordneten Verbindungskanäle 138 in den Sammelkanal 140 strömt, wird durch die Lufttemperaturkonditioniereinheit 192 geführt und dabei von derselben konditioniert.

Die Anordnung der Konditioniereinheiten 188 in den Sammelkanälen 140 führt dazu, dass die Unterteilluftströme A1 und A2 sowie die Unterteilluftströme B1 und B2 stromabwärts der jeweiligen Konditioniereinheit 188, das heißt stromabwärts der Luftfeuchtigkeitskonditioniereinheit 190 beziehungsweise stromabwärts der Lufttemperaturkonditioniereinheit 192, wieder zu den Teilluftströmen A beziehungsweise B zusammengeführt werden.

An den der Werkstückeintrittsseite 144 der Lakkierkabine 110 zugewandten Enden 146 der Sammelkanäle 140 werden die Teilluftströme A und B durch die Gebläse 148 in die Rückführleitungen 150 geleitet und innerhalb der geradlinigen Rückführabschnitte 154 in den oberen Bereich der Lackieranlage 100 geführt.

Mittels der gekrümmten Rückführabschnitte 162 werden die in den Rückführleitungen 150 geführten Teilluftströme A und B umgelenkt und dem oberen Bereich 178 der Kammer 170 des Plenums 168 zugeführt.

In diesem oberen Bereich 178 erfolgt eine Vermischung der unterschiedlich konditionierten Teilluftströme A und B zu dem Gesamtluftstrom AB.

Anschließend wird die so vermischte Luft durch die in der Zwischendecke 176 angeordneten Sicherheitsfilter 182 in den unteren Bereich 180 der Kammer 170 des Plenums 168 und von dort durch die Filterdecke 174 in den Applikationsbereich 108 der Lackierkabine 110 geleitet.

Mittels der Sicherheitsfilter 182 werden eventuell noch in dem Luftstrom befindliche Verunreinigungen entfernt, um jegliche Zufuhr von Verunreinigung zu dem Applikationsbereich 108 der Lackierkabine 110 zu vermeiden.

Sowohl die Sicherheitsfilter 182 als auch die Filterdecke 174 dienen ferner der Vergleichmäßigung des Luftstroms durch den Applikationsbereich 108 der Lakkierkabine 110 und der Verminderung von Verwirbelungen.

Bei dieser Ausführungsform ist gemäß dem in Fig. 8 dargestellten Verfahrensschema vorgesehen, dass der durch den Applikationsbereich 108 der Lackierkabine 110 geführte Gesamtluftstrom AB in dem Filterraum 120 zunächst in die Teilluftströme A und B unterteilt wird.

In dem Filterraum 120 der Lackieranlage 100 werden beidseitig jeweils ungefähr 18.000 m³ Luft pro Stunde in die Filtervorrichtungen 124 eingesaugt.

Zu beiden Seiten des Filterraums 120 wird durch die Luftzuleitungsvorrichtungen 129 jeweils ein Querluftstrom Q von 900 m³/h mit einer Temperatur von 34°C und 42 % Luftfeuchtigkeit zugegeben.

Dieser Querluftstrom Q kann als Umluft über die Sperrklappen 210 aus den geradlinigen Rückführabschnitten 154 oder als Zuluft über die Zuluftklappen 196 von den Zuluftanlagen 194 zugeführt werden. Es kann auch vorgesehen sein, dass der Querluftstrom Q bei teilweise geöffneten Sperrklappen 210 und Zuluftklappen 196 aus Umluft und Zuluft gemischt wird.

An Strömungswegverzweigungen 198 (welche bei der beschriebenen Ausführungsform durch die Einlassöffnungen der Filtervorrichtungen 124 realisiert sind) erfolgt eine Aufteilung der Teilluftströme A und B in unterschiedlich konditionierbare UnterteilluftströmeA1, A2, B1 und B2.

Mit einer Geschwindigkeit von ungefähr 8 m/s wird der Unterteilluftstrom A1 des Teilluftstroms A der Luftfeuchtigkeitskonditioniereinheit 190 zugeleitet.

Der Unterteilluftstrom A1 wird bei dieser Ausführungsform mittels der Luftfeuchtigkeitskonditioniereinheit 190 befeuchtet.

Der Unterteilluftstrom A2 wird an der Luftfeuchtigkeitskonditioniereinheit 190 mittels einer Umgehungsleitung 208 vorbeigeleitet und somit nicht konditioniert. In dem Strömungsweg des Unterteilluftstroms A2, das heißt in der Umgehungsleitung 208, kann ein als Bypass-Klappe 200 ausgebildetes Ventil vorgesehen sein.

Mit der Bypass-Klappe 200 kann reguliert und/ oder gesteuert werden, welcher Anteil des Teilluftstroms A mittels der Luftfeuchtigkeitskonditioniereinheit 190 konditioniert wird.

Stromabwärts von der Luftfeuchtigkeitskonditioniereinheit 190 ist eine Strömungswegzusammenführung 202 vorgesehen (welche bei der beschriebenen Ausführungsform durch die Einmündungen der beiden dem Gebläse 148 benachbarten Verbindungskanäle 138 in den bezüglich der Förderrichtung 106 linken Sammelkanal 140 realisiert ist).

Mittels der Strömungswegzusammenführung 202 werden die Unterteilluftströme A1 und A2 wieder zu dem Teilluftstrom A zusammengeführt.

Stromabwärts von der Strömungswegzusammenführung 202 ist ein Gebläse 148 angeordnet, welches den Teilluftstrom A antreibt.

Das als Ventilator ausgebildete Gebläse 148 weist eine Leistung von ungefähr 18,5 kW auf.

Stromabwärts von dem Gebläse 148 ist eine Abluftanlage 204 angeordnet, wobei ein Abluftstrom mittels eines als Abluftklappe 206 ausgebildeten Ventils regelbar ist.

Bei dieser Ausführungsform beträgt der mittels der Abluftanlage 204 aus dem Teilluftstrom A abgeführte Abluftstrom 900 m³/h.

Mit einer Geschwindigkeit von ungefähr 8 m/s wird der Unterteilluftstrom B1 des Teilluftstroms B der Lufttemperaturkonditioniereinheit 192 zugeleitet.

Der Unterteilluftstrom B1 wird bei dieser Ausführungsform mittels der Lufttemperaturkonditioniereinheit 192 gekühlt.

Der Unterteilluftstrom B2 wird an der Lufttemperaturkonditioniereinheit 192 mittels einer Umgehungsleitung 208 vorbeigeleitet und somit nicht konditioniert. In dem Strömungsweg des Unterteilluftstroms B2, das heißtin der Umgehungsleitung 208, kann ein als Bypass-Klappe 200 ausgebildetes Ventil vorgesehen sein.

Mit der Bypass-Klappe 200 kann reguliert und/ oder gesteuert werden, welcher Anteil des Teilluftstroms B mittels der Lufttemperaturkonditioniereinheit 192 konditioniert wird.

Stromabwärts von der Lufttemperaturkonditioniereinheit 192 ist eine Strömungswegzusammenführung 202 vorgesehen (welche bei der beschriebenen Ausführungsform durch die Einmündungen der beiden dem Gebläse 148 benachbarten Verbindungskanäle 138 in den bezüglich der Förderrichtung 106 rechten Sammelkanal 140 realisiert ist).

Mittels der Strömungswegzusammenführung 202 werden die Unterteilluftströme B1 und B2 wieder zu dem Teilluftstrom B zusammengeführt. Stromabwärts von der Strömungswegzusammenführung 202 ist ein Gebläse 148 angeordnet, welches den Teilluftstrom B antreibt.

Das als Ventilator ausgebildete Gebläse 148 weist eine Leistung von ungefähr 18,5 kW auf.

Stromabwärts von dem Gebläse 148 ist eine Abluftanlage 204 angeordnet, wobei ein Abluftstrom mittels eines als Abluftklappe 206 ausgebildeten Ventils regelbar ist.

Bei dieser Ausführungsform beträgt der mittels der Abluftanlage 204 ausdem Teilluftstrom B abgeführte Abluftstrom 900 m³/h.

Die Teilluftströme A und B werden im oberen Bereich 178 der Kammer 170 des Plenums 168 zu dem Gesamtluftstrom AB zusammengeführt.

Der Gesamtluftstrom AB wird anschließend durch die in der Zwischendecke 176 angeordneten Sicherheitsfilter 182 in den unteren Bereich 180 der Kammer 170 des Plenums 168 und von dort durch die Filterdecke 174 in den Applikationsbereich 108 der Lackierkabine 110 geführt.

Die Luft wird also zumindest teilweise in einem Umluftkreislauf geführt, das heißt, dass zumindest ein Teil der aus dem Applikationsbereich 108 der Lackierkabine 110 entnommenen Luft nach der Reinigung und Konditionierung dem Applikationsbereich 108 der Lakkierkabine 110 wieder zugeführt wird.

In dem Applikationsbereich 108 der Lackierkabine 110 erreicht die Luft bei einem Gesamtluftstrom AB von insgesamt 36.000 m³/h eine Sinkgeschwindigkeit von ungefähr 0,3 m/s.

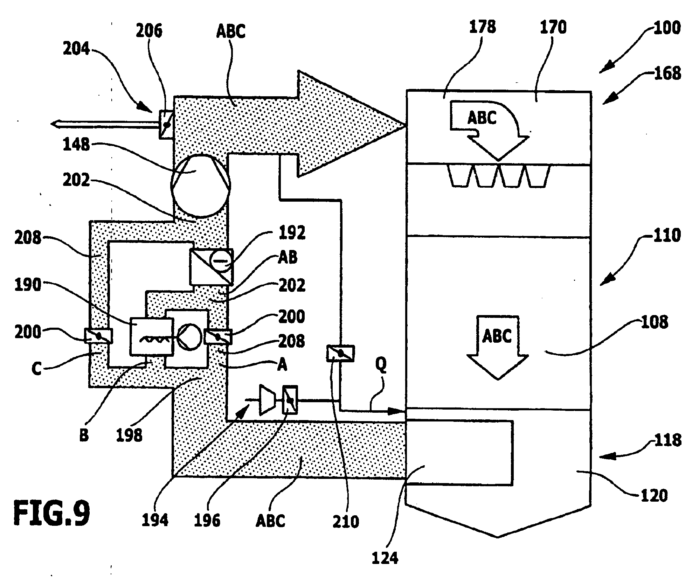

Eine in Fig. 9 dargestellte zweite Ausführungsform einer Vorrichtung zum Zuführen von Luft zu einem Applikationsbereich einer Lackieranlage unterscheidet sich von der in den Fig. 1 bis 8 dargestellten ersten Ausführungsform dadurch, dass eine Absaugung des Gesamtluftstroms AB in dem Filterraum 120 der Lackieranlage 100 nur einseitig erfolgt.

Stromabwärts von den Filtervorrichtungen 124 erfolgt an einer Strömungswegverzweigung 198 eine Aufteilung des Gesamtluftstroms ABC in drei Teilluftströme A, B und C.

Nur der Teilluftstrom B wird mittels einer Luftfeuchugkeitskonditioniereinheit 190 konditioniert.

Der Teilluftstrom A wird durch eine Umgehungsleitung 208 an der Luftfeuchtigkeitskonditioniereinheit 190 vorbeigeführt und an einer Strömungswegzusammenführung 202 mit der mittels der Luftfeuchtigkeitskondilioniereinheit 190 konditionierten Luft des Teilluftstroms B zu dem Teilluftstrom AB zusammengeführt.

Der zusammengeführte Teilluftstrom AB wird mittels der Lufttemperaturkonditioniereinheit 192 konditioniert.

Stromabwärts von der Lufttemperaturkonditioniereinheit 192 erfolgt schließlich eine Zusammenführung der so konditionierten Luft des Teilluftstroms AB mit dem nicht konditionierten Teilluftstrom C zu dem Gesamtluftstrom ABC an einer Strömungswegzusammenführung 202.

Der Gesamtluftstrom ABC wird mittels des Gebläses 148 dem Plenum 168 zugeführt.

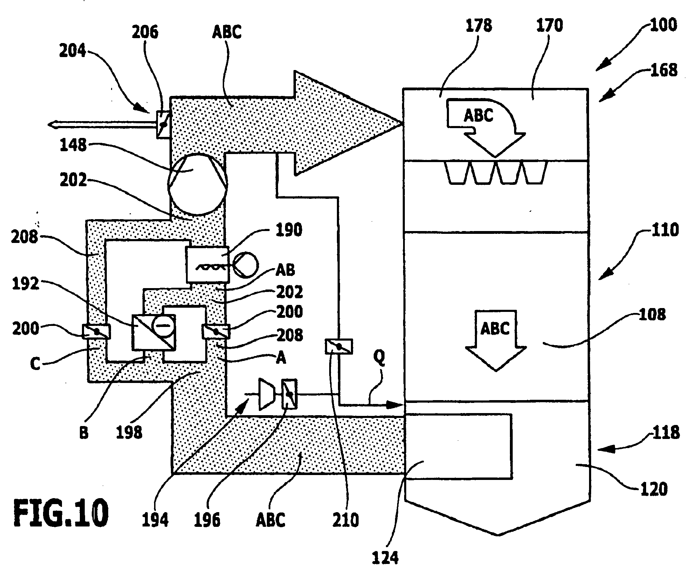

Eine in Fig. 10 dargestellte dritte Ausführungsform einer Vorrichtung zum Zuführen von Luft zu einem Applikationsbereich einer Lackieranlage unterscheidet sich von der in Fig. 9 dargestellten zweiten Ausführungsform dadurch, dass die Luftfeuchtigkeitskonditioniereinheit 190 und die Lufttemperaturkonditioniereinheit 192 miteinander vertauscht angeordnet sind.

Es erfolgt somit zunächst eine Konditionierung des Teilluftstroms B mittels der Lufttemperaturkonditioniereinheit 192. Nach einer Zusammenführung des so konditionierten Teilluftstroms B mit dem unkonditionierten Teilluftstrom A erfolgt eine Konditionierung des Teilluftstroms AB mittels der Luftfeuchtigkeitskonditioniereinheit 190.

Im Übrigen stimmt die in Fig. 10 dargestellte dritte Ausführungsform der Vorrichtung zum Zuführen von Luft zu einem Applikationsbereich einer Lackieranlage hinsichtlich Aufbau und Funktion mit der in Fig. 9 dargestellten zweiten Ausführungsform überein, auf deren vorstehende Beschreibung insoweit Bezug genommen wird.

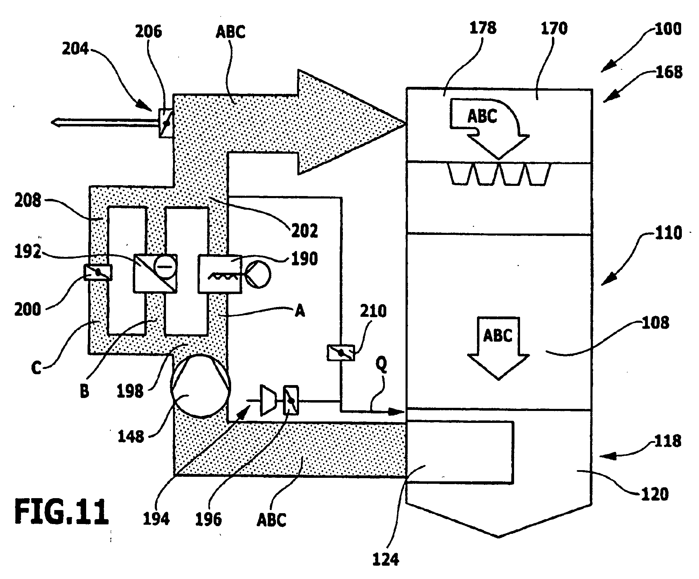

Eine in Fig. 11 dargestellte vierte Ausführungsform einer Vorrichtung zum Zuführen von Luft zu einem Applikationsbereich einer Lackieranlage unterscheidet sich von der in Fig. 10 dargestellten dritten Ausführungsform dadurch, dass das Gebläse 148 nicht stromabwärts von der Strömungswegzusammenführung 202, sondern stromaufwärts von der Strömungswegverzweigung 198 angeordnet ist, wobei an der Strömungswegverzweigung 198 drei Teilluftströme A, B und C abzweigen. Der Teilluftstrom A wird mittels der Luftfeuchtigkeitskonditioniereinheit 190 konditioniert. DerTeilluftstrom B wird mittels der Lufttemperaturkonditioniereinheit 192 konditioniert. Der Teilluftstrom C wird nicht konditioniert.

An der Strömungswegzusammenführung 202 werden bei dieser Ausführungsform alle drei Teilluftströme A, B und C wieder zu dem Gesamtluftstrom ABC zusammengeführt.

Im Übrigen stimmt die in Fig. 11 dargestellte vierte Ausführungsform der Vorrichtung zum Zuführen von Luft zu einem Applikationsbereich einer Lackieranlage hinsichtlich Aufbau und Funktion mit der in Fig. 10 dargestellten dritten Ausführungsform überein, auf deren vorstehende Beschreibung insoweit Bezug genommen wird.

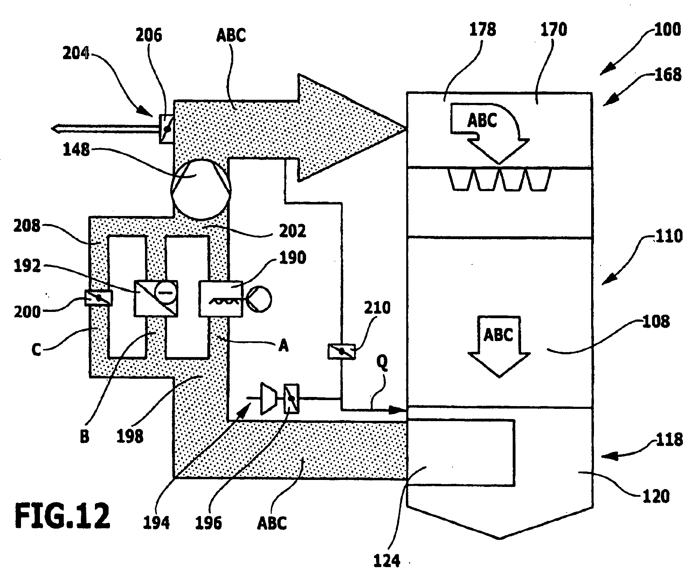

Eine in Fig. 12 dargestellte fünfte Ausführungsform einer Vorrichtung zum Zuführen von Luft zu einem Applikationsbereich einer Lackieranlage unterscheidet sich von der in Fig. 11 dargestellten vierten Ausführungsform dadurch, dass das Gebläse 148 nicht stromaufwärts von der Strömungswegverzweigung 198, sondern stromabwärts von der Strömungswegzusammenführung 202 angeordnet ist.

Da das Gebläse 148 einen durch dasselbe geführten Luftstrom stets erwärmt, bietet eine Anordnung des Gebläses 148 stromabwärts von einer Kühlvorrichtung den Vorteil, dass der Luftstrom stärker entfeuchtet wird. Bei einer Anordnung des Gebläses 148 stromaufwärts von einer Kühlvorrichtung wird hingegen der Luftstrom zunächst erwärmt und ein Entfeuchten somit behindert, da die vom Gebläse 148 erwärmte Luft mehr Feuchte aufnehmen kann.

Im Übrigen stimmt die in Fig. 12 dargestellte fünfte Ausführungsform der Vorrichtung zum Zuführen von Luft zu einem Applikationsbereich einer Lackieranlage hinsichtlich Aufbau und Funktion mit der in Fig. 11 dargestellten vierten Ausführungsform überein, auf deren vorstehende Beschreibung insoweit Bezug genommen wird.

Durch die erfindungsgemäße Anordnung zumindest eines Teils eines geradlinigen Rückführabschnitts innerhalb einer Außenkontur einer Lackierkabine sind eine besonders platzsparende Konstruktion und ein besonders energieeffizienter Betrieb der Lackieranlage möglich.

## Patentansprüche

1. Lackieranlage, umfassend mindestens eine Lackierkabine (110), mindestens eine Vorrichtung zum Zuführen von Luft zu der Lackierkabine (110), mindestens eine Konditioniereinheit (188), ein oberhalb der Lackierkabine (110) angeordnetes, mittels einer Filterdecke (174) von der Lackierkabine (110) getrenntes Plenum (168), einen unter der Lackierkabine (110) angeordneten Filterraum (120) und eine Fördervorrichtung (104) zur Förderung von in der Lackierkabine (110) zu lackierenden Werkstücken (102) in einer Förderrichtung (106), wobei die Vorrichtung mindestens eine Rückführleitung (150) zur Rückführung von Luft in einem Umluftkreislauf umfasst, die mindestens eine Konditioniereinheit (188) mit dem Plenum (168) verbindet und mindestens einen geradlinigen Rückführabschnitt (154) umfasst, der sich mindestens über eine Höhe (h) erstreckt, die größer ist als der Abstand (H) zwischen einer Unterseite (175) der Filterdecke (174) und einer Oberseite (105) der Fördervorrichtung (104),
**dadurch gekennzeichnet,**
**dass** zumindest ein Teil des geradlinigen Rückführabschnitts (154) innerhalb einer Außenkontur (111) der Lackierkabine (110) verläuft und dass zumindest ein Teil des geradlinigen Rückführabschnitts (154) des Umluftkreislaufs zumindest teilweise innerhalb einer Außenkontur (121) des Filterraums (120) verläuft,
wobei die Außenkontur (111) der Lackierkabine (110) die äußere Begrenzung des Raumbereichs ist, der, wenn jeder senkrecht zur Förderrichtung (106) genommene Querschnitt der Lackierkabine (110) längs der Förderrichtung (106) bis zu den Enden der Lackierkabine (110) bewegt wird, von mindestens einem dieser Querschnitte überstrichen wird,
wobei die Außenkontur (121) des Filterraums (120) die äußere Begrenzung des Raumbereichs ist, der, wenn jeder senkrecht zur Förderrichtung (106) genommene Querschnitt des Filterraums (120) längs der Förderrichtung (106) bis zu den Enden der Lackierkabine (110) bewegt wird, von mindestens einem dieser Querschnitte überstrichen wird.

2. Lackieranlage nach Anspruch 1, **dadurch gekennzeichnet, dass** der Filterraum (120) mindestens eine Außenwand (122) umfasst, die mit mindestens einer Außenwand (114) der Lackierkabine (110) zumindest abschnittsweise im Wesentlichen fluchtet.

3. Lackieranlage nach einem der Ansprüche 1 oder 2, **dadurch gekennzeichnet, dass** ein stromaufwärts angeordnetes Ende (164) eines geradlinigen Rückführabschnitts (154) mit mindestens einem Gebläse (148) zum Antreiben einer Luftströmung in dem geradlinigen Rückführabschnitt (154) in Fluidverbindung steht.

4. Lackieranlage nach Anspruch 3, **dadurch gekennzeichnet, dass** das mindestens eine Gebläse (148) zwischen mindestens einer Konditioniereinheit (188) und dem geradlinigen Rückführabschnitt (154) angeordnet ist.

5. Lackieranlage nach einem der Ansprüche 1 bis 4, **dadurch gekennzeichnet, dass** ein stromaufwärts angeordnetes Ende (164) des geradlinigen Rückführabschnitts (154) in Fluidverbindung mit mindestens einem Sammelkanal (140) steht.

6. Lackieranlage nach einem der Ansprüche 1 bis 5, **dadurch gekennzeichnet, dass** zwei geradlinige Rückführabschnitte (154) vorgesehen sind, die benachbart zu einander gegenüberliegenden, die Lakkierkabine (110) quer zur Förderrichtung (106) begrenzenden seitlichen Außenwänden (114) der Lakkierkabine (110) angeordnet sind.

7. Lackieranlage nach einem der Ansprüche 1 bis 6, **dadurch gekennzeichnet, dass** zwei geradlinige Rückführabschnitte (154) vorgesehen sind, die bezüglich einersich in der Förderrichtung (106) erstrekkenden vertikalen Längsmittelebene (128) der Lakkierkabine (110) spiegelsymmetrisch zueinander angeordnet sind.

8. Lackieranlage nach einem der Ansprüche 6 oder 7, **dadurch gekennzeichnet, dass** die zwei geradlinigen Rückführabschnitte (154) zumindest teilweise auf einander zugewandten Innenseiten (142) von zwei parallel zur Förderrichtung (106) angeordneten Sammelkanälen (140) vorgesehen sind.

9. Lackieranlage nach einem der Ansprüche 1 bis 8, **dadurch gekennzeichnet, dass** in mindestens einer der die Lackierkabine (110) quer zur Förderrichtung (106) begrenzenden seitlichen Außenwände (114) mindestens eine Einbuchtung (184) zur Aufnahme zumindest eines Teils des mindestens einen geradlinigen Rückführabschnitts (154) vorgesehen ist.

10. Lackieranlage nach einem der Ansprüche 1 bis 9, **dadurch gekennzeichnet, dass** zumindest ein Teil des geradlinigen Rückführabschnitts (154) des Umluftkreislaufs zumindest teilweise innerhalb einer Außenkontur (169) des Plenums (168) verläuft, wobei die Außenkontur (169) des Plenums (168) im Wesentlichen durch die Außenflächen eines Quaders gebildet ist.

11. Lackieranlage nach einem der Ansprüche 1 bis 10, **dadurch gekennzeichnet, dass** das Plenum (168) Außenwände (172) umfasst, die mit Außenwänden (114) der Lackierkabine (110) im Wesentlichen fluchten.

12. Lackieranlage nach einem der Ansprüche 1 bis 11, **dadurch gekennzeichnet, dass** an der Lackierkabine (110) mindestens eine Einbuchtung (184) zur Aufnahme zumindest eines Teils des geradlinigen Rückführabschnitts (154) des Umluftkreislaufs vorgesehen ist, die sich oberhalb der Lackierkabine (110) im Bereich des Plenums (168) fortsetzt, und dass der geradlinige Rückführabschnitt (154) sich in die Einbuchtung (184) erstreckt.

13. Lackieranlage nach einem der Ansprüche 1 bis 12, **dadurch gekennzeichnet, dass** ein senkrecht zur Förderrichtung (106) genommener Querschnitt der Außenkontur (111) der Lackierkabine (1 10) gleich groß ist wie ein größter senkrecht zur Förderrichtung (106) genommener Querschnitt der Lackierkabine (110).

## Claims

1. Paint shop, comprising at least one paint booth (110), at least one device for supplying air to the paint booth (110), at least one conditioning unit (188), a plenum (168) disposed above the paint booth (110) and separated from the paint booth (110) by means of a filter ceiling (174), a filter space (120) arranged below the paint booth (110), and a conveying device (104) for conveying workpieces (102) to be painted in the paint booth (110) in a conveying direction (106), wherein the device comprises at least one return line (150) for returning air in a recirculating air circuit, which return line (150) connects at least one conditioning unit (188) to the plenum (168) and comprises at least one rectilinear return portion (154) that extends at least over a height (h) that is greater than the spacing (H) between an underside (175) of the filter ceiling (174) and an upper side (105) of the conveying device (104),
**characterized in**
**that** at least part of the rectilinear return portion (154) extends inside an external contour (111) of the paint booth (110), and that at least part of the rectilinear return portion (154) of the recirculating air circuit extends at least partially inside an external contour (121) of the filter space (120),
wherein an external contour (111) of the paint booth (110) is the outer boundary of the spatial region which, if each cross section - taken at right angles to the conveying direction (106) - of the paint booth (110) is moved along the conveying direction (106) up to the ends of the paint booth (110), is swept by at least one of these cross sections,
wherein an external contour (121) of the filter space (120) is the outer boundary of the spatial region which, if each cross section - taken at right angles to the conveying direction (106) - of the filter space (120) is moved along the conveying direction (106) up to the ends of the paint booth (110), is swept by at least one of these cross sections.

2. Paint shop according to claim 1, **characterized in that** the filter space (120) comprises at least one outer wall (122) that is at least in sections substantially flush with at least one outer wall (114) of the paint booth (110).

3. Paint shop according to one of claims 1 or 2, **characterized in that** an upstream end (164) of a rectilinear return portion (154) is fluidically connected to at least one blower (148) for driving an air flow in the rectilinear return portion (154).

4. Paint shop according to claim 3, **characterized in that** the at least one blower (148) is disposed between at least one conditioning unit (188) and the rectilinear return portion (154).

5. Paint shop according to one of claims 1 to 4, **characterized in that** an upstream end (164) of the rectilinear return portion (154) is fluidically connected to at least one collecting channel (140).

6. Paint shop according to one of claims 1 to 5, **characterized in that** two rectilinear return portions (154) are provided, which are disposed adjacent to mutually opposite lateral outer walls (114) of the paint booth (110) that delimit the paint booth (110) transversely of the conveying direction (106).

7. Paint shop according to one of claims 1 to 6, **characterized in that** two rectilinear return portions (154) are provided, which are arranged mirror-symmetrically to one another in relation to a vertical longitudinal centre plane (128) of the paint booth (110) that extends in the conveying direction (106).

8. Paint shop according to one of claims 6 or 7, **characterized in that** the two rectilinear return portions (154) are provided at least partially on mutually opposing inner sides (142) of two collecting channels (140), which are disposed parallel to the conveying direction (106).

9. Paint shop according to one of claims 1 to 8, **characterized in that** in at least one of the lateral outer walls (114) that delimit the paint booth (110) transversely of the conveying direction (106) at least one indentation (184) is provided for receiving at least part of the at least one rectilinear return portion (154).

10. Paint shop according to one of claims 1 to 9, **characterized in that** at least part of the rectilinear return portion (154) of the recirculating air circuit extends at least partially inside an external contour (169) of the plenum (168), wherein the external contour (169) of the plenum (168) is formed substantially by the outer faces of a cuboid.

11. Paint shop according to one of claims 1 to 10, **characterized in that** the plenum (168) comprises outer walls (172) that are substantially flush with outer walls (114) of the paint booth (110).

12. Paint shop according to one of claims 1 to 11, **characterized in that** on the paint booth (110) at least one indentation (184) for receiving at least part of the rectilinear return portion (154) of the recirculating air circuit is provided, which continues above the paint booth (110) in the region of the plenum (168), and that the rectilinear return portion (154) extends into the indentation (184).

13. Paint shop according to one of claims 1 to 12, **characterized in that** a cross section - taken at right angles to the conveying direction (106) - of the external contour (111) of the paint booth (110) is of equal size to a maximum cross section - taken at right angles to the conveying direction (106) - of the paint booth (110).

## Revendications

1. Installation de peinture, comprenant au moins une cabine de peinture (110), au moins un dispositif d'amenée d'air à la cabine de peinture (110), au moins une unité de conditionnement (188), une chambre d'air (168) située au-dessus de la cabine de peinture (110) et séparée de la cabine de peinture (110) par un plafond filtrant (174), un compartiment de filtrage (120) situé en dessous de la cabine de peinture (110) et un dispositif de transport (104) pour le convoyage dans une direction de transport (106) des pièces (102) à peindre dans la cabine de peinture (110), le dispositif comprenant au moins une conduite de retour (150) pour ramener l'air dans un circuit de recyclage d'air, laquelle relie au moins une unité de conditionnement (188) à la chambre d'air (168) et comprend au moins un segment de retour en ligne droite (154) qui s'étend au moins sur une hauteur (h) supérieure à la distance (H) entre une face inférieure (175) du plafond filtrant (174) et une face supérieure (105) du dispositif de transport (104),
**caractérisée en ce que** :
au moins une partie du segment de retour en ligne droite (154) s'étend à l'intérieur d'un contour extérieur (111) de la cabine de peinture (110), et **en ce qu'**au moins une partie du segment de retour en ligne droite (154) du circuit de recyclage d'air s'étend au moins partiellement à l'intérieur d'un contour extérieur (121) du compartiment de filtrage (120),
le contour extérieur (111) de la cabine de peinture (110) étant la limite extérieure de l'espace traversé par au moins une desdites sections transversales, quand chaque section transversale de la cabine de peinture (110) prise perpendiculairement à la direction de transport (106) est déplacée le long de la direction de transport (106) jusqu'aux extrémités de la cabine de peinture (110),
le contour extérieur (121) du compartiment de filtrage (120) étant la limite extérieure de l'espace traversé par au moins une desdites sections transversales, quand chaque section transversale du compartiment de filtrage (120) prise perpendiculairement à la direction de transport (106) est déplacée le long de la direction de transport (106) jusqu'aux extrémités de la cabine de peinture (110).

2. Installation de peinture selon la revendication 1, **caractérisée en ce que** le compartiment de filtrage (120) comporte au moins une paroi extérieure (122), laquelle est au moins partiellement sensiblement alignée avec au moins une paroi extérieure (114) de la cabine de peinture (110).

3. Installation de peinture selon l'une des revendications 1 et 2, **caractérisée en ce qu'**une extrémité amont (164) d'un segment de retour en ligne droite (154) est en liaison fluidique avec au moins une soufflante (148) pour l'entraînement d'un courant d'air dans le segment de retour en ligne droite (154).

4. Installation de peinture selon la revendication 3, **caractérisée en ce que** l'au moins une soufflante (148) est disposée entre au moins une unité de conditionnement (188) et le segment de retour en ligne droite (154).

5. Installation de peinture selon l'une des revendications 1 à 4, **caractérisée en ce qu'**une extrémité amont (164) du segment de retour en ligne droite (154) est en liaison fluidique avec au moins un canal collecteur (140).

6. Installation de peinture selon l'une des revendications 1 à 5, **caractérisée en ce que** deux segments de retour en ligne droite (154) sont prévus, lesquels sont contigus à des parois extérieures (114) latérales de la cabine de peinture (110) qui se font face et délimitent la cabine de peinture (110) transversalement à la direction de transport (106).

7. Installation de peinture selon l'une des revendications 1 à 6, **caractérisée en ce que** deux segments de retour en ligne droite (154) sont prévus, lesquels sont disposés symétriquement l'un à l'autre par rapport à un plan longitudinal médian vertical (128) de la cabine de peinture (110) qui s'étend dans la direction de transport (106).

8. Installation de peinture selon l'une des revendications 6 et 7, **caractérisée en ce que** les deux segments de retour en ligne droite (154) sont prévus au moins en partie sur des faces intérieures (142) opposées de deux canaux collecteurs (140) parallèles à la direction de transport (106).

9. Installation de peinture selon l'une des revendications 1 à 8, **caractérisée en ce qu'**au moins un retrait (184) pour la réception d'au moins une partie de l'au moins un segment de retour en ligne droite (154) est prévu dans au moins une des parois extérieures (114) latérales qui délimitent la cabine de peinture (110) transversalement à la direction de transport (106).

10. Installation de peinture selon l'une des revendications 1 à 9, **caractérisée en ce qu'**au moins une partie du segment de retour en ligne droite (154) du circuit de recyclage d'air s'étend au moins partiellement à l'intérieur d'un contour extérieur (169) de la chambre d'air (168), ledit contour extérieur (169) de la chambre d'air (168) étant sensiblement formé par les surfaces extérieures d'un parallélépipède.

11. Installation de peinture selon l'une des revendications 1 à 10, **caractérisée en ce que** la chambre d'air (168) comporte des parois extérieures (172) sensiblement alignées avec des parois extérieures (114) de la cabine de peinture (110).

12. Installation de peinture selon l'une des revendications 1 à 11, **caractérisée en ce qu'**au moins un retrait (184) pour la réception d'au moins une partie du segment de retour en ligne droite (154) du circuit de recyclage d'air est prévu sur la cabine de peinture (110), lequel se poursuit au-dessus de la cabine de peinture (110) au niveau de la chambre d'air (168), et **en ce que** le segment de retour en ligne droite (154) s'étend dans le retrait (184).

13. Installation de peinture selon l'une des revendications 1 à 12, **caractérisée en ce qu'**une section transversale du contour extérieur (111) de la cabine de peinture (110) présentée perpendiculairement à la direction de transport (106) est de grandeur égale à une section transversale maximale de la cabine de peinture (110) présentée perpendiculairement à la direction de transport (106).
